# EUROPEAN PATENT SPECIFICATION

(11) **EP 4 391 119 B1**
(45) Date of publication and mention of the grant of the patent: **02.09.2026**
(21) Application number: 22927885.8
(22) Date of filing: 28.02.2022
(51) Int. Cl.: H01M 4/66, H01M 4/74, H01M 4/64, H01M 4/70

(54) **CURRENT COLLECTOR, ELECTRODE PLATE, BATTERY CELL AND DEVICE**
STROMKOLLEKTOR, ELEKTRODENPLATTE, BATTERIEZELLE UND VORRICHTUNG
COLLECTEUR DE COURANT, PLAQUE D'ÉLECTRODE, ÉLÉMENT DE BATTERIE ET DISPOSITIF

(43) Date of publication of application: 26.06.2024
(73) Proprietor: Contemporary Amperex Technology (Hong Kong) Limited, Central, Central And Western District (HK)
(72) Inventor: LI, Lianhua, Ningde, Fujian 352100 (CN); YANG, Xianwei, Ningde, Fujian 352100 (CN); LU, Yang, Ningde, Fujian 352100 (CN); QI, Shaowei, Ningde, Fujian 352100 (CN); QI, Chen, Ningde, Fujian 352100 (CN); WU, Zirui, Ningde, Fujian 352100 (CN); JIN, Chao, Ningde, Fujian 352100 (CN); REN, Miaomiao, Ningde, Fujian 352100 (CN); YE, Yonghuang, Ningde, Fujian 352100 (CN)
(74) Representative: Gong, Jinping
(86) International application number: PCT/CN2022/078414
(87) International publication number: WO 2023/159604

(56) References cited:
- CN-A- 108 281 662
- CN-A- 112 290 027
- CN-A- 112 290 027
- JP-A- H11 219 855
- US-A1- 2012 315 537
- US-A1- 2019 305 319

## Description

### TECHNICAL FIELD

The present application belongs to the technical field of electrochemical devices, in particular to a current collector as specified in any of claims 1-12, an electrode plate as specified in claim 13, a cell as specified in claim 14, and a device as specified in claim 15.

### BACKGROUND

Batteries have the advantages of high specific energy and high power density, and they are widely used in electronic devices, such as cell phones, laptop computers, battery cars, electric cars, electric planes, electric boats, electric toy cars, electric toy boats, electric toy planes, and electric tools, among others. US2019/305319A1 mentions a current collector. CN112290027A mentions a lightweight bipolar current collector.

In the development of battery technology, lithium-ion batteries are widely used because they have the advantages of high energy density, high output power, long cycle life and low environment pollution. At present, not only should energy density of batteries be improved, but also a processing performance of batteries should be paid attention to. If components of batteries have a poor processing performance or are difficult to be processed, it will not be conducive to the promotion and application of batteries. Therefore, how to improve a processing performance of batteries has been a technical problem throughout the production of batteries.

### SUMMARY

The present invention is defined by the appended claims. In view of the above, the present application provides a current collector, an electrode plate, a cell, a battery, a device, a manufacturing method and apparatus, in which the current collector has good processing performances and thus can improve the processing performance of batteries.

In a first aspect of the invention, the present application provides a current collector comprising:
a support layer comprising an insulating base and a support structure, the support structure being embedded in the insulating base to enhance strength of the support layer, wherein the surface of the support layer (1) is a surface of the support layer (1) that is perpendicular to its thickness direction; and
a conductive layer, provided on the surface of the support layer; wherein the support structure has a net-like projection along a thickness direction of the current collector, and the insulating base fills gaps in the support structure.

In the above technical solution, the support structure is used to enhance the strength of the support layer, so it not only increases the overall strength of the current collector and can improve the problem of tape breakage during processing, but also allows the strength of the support layer to be close to that of the conductive layer, narrowing the gap in structural strength between the support layer and the conductive layer, which is conducive to reducing the difference in deformation between the conductive layer and the support layer during processing. Thus, it is conducive to improving processing performance of the current collector.

In some embodiments, the support layer has a Young's modulus in the range of 4GPa≤E≤20GPa, which enables the support layer to have sufficient strength, improve the problem of tape breakage during processing, and reduce the difference in deformation between the conductive layer and the support layer during processing. Thus, it is conducive to improving processing performances of the current collector.

In some embodiments, the conductive layer is provided on both surfaces of the support layer, and the support structure connects the conductive layers on both surfaces of the support layer, where the conductive layer can function as supporting the support structure, increasing the function of the support structure in the support layer to increase its strength, and further increasing the strength of the support layer.

In some embodiments, the support structure has a Young's modulus that is greater than that of the insulating base, making strength of the support structure greater than strength of the insulating base, thereby enabling the support structure to serve to enhance strength of the support layer.

In some embodiments, the support structure is made of an electrically conductive material, enabling the support structure to be electrically conductive and able to electrically connect the conductive layers on both surfaces of the support layer, thereby improving the current-carrying capability of the current collector.

In some embodiments, the support structure is made of at least one of aluminum, copper, nickel, titanium, silver, nickel-copper alloy, aluminum-zirconium alloy, aluminum-lithium alloy, titanium-aluminum alloy, magnesium alloy, beryllium alloy, and titanium alloy, enabling the support structure to have good electrical conductivity.

In some embodiments, the support structure is made using at least one of mechanical roll rolling, bonding, vapor deposition method, chemical plating, or laser etching, such that the support structure is formed in the insulating base.

In some embodiments, the support structure is made of a high performance fiber material, such that the support structure has better mechanical properties and corrosion resistance. The high performance fiber material having a strength greater than 17.6 cN/dtex and an elasticity modulus of 440 cN/dtex or greater.

In some embodiments, the support structure is made of at least one of poly-p-phenylene terephthalamide fibers, aromatic polyamide copolymer fibers, heterocyclic polyamide fibers, carbon fibers, graphite fibers, and silicon carbide fibers, which can increase the strength of the support layer, and narrow the gap in structural strength between the support layer and the conductive layer, and which is conductive to reducing the difference in deformation between the conductive layer and the support layer during processing. Thus, it is conducive to improving processing performance of the current collector.

In some embodiments, the insulating base is made of a polymeric material, which polymeric material has a less density and helps to improve weight energy density of batteries, and which polymeric material makes the insulating base have good insulation, can increase the short circuit resistance of batteries when a short circuit occurs under abnormal conditions, and reduce the short circuit current, thereby reducing heat generation during short circuit and improving safety performances of batteries.

In some embodiments, the insulating base is made of at least one of polyamide, polyterephthalate, polyimide, polyethylene, polypropylene, polystyrene, polyvinyl chloride, aramid, polydimethylene diamide, acrylonitrile-butadiene-styrene copolymer, polybutylene terephthalate, (poly-p-phenylene terephthamide), ethylene-propylene rubber, polyformaldehyde, epoxy resin, phenolic resin, polytetrafluoroethylene, polyphenylene sulfide, polyvinylidene fluoride, silicone rubber, polycarbonate, cellulose, cellulose derivative, starch, starch derivative, protein, protein derivative, polyvinyl alcohol, cross-linked polyvinyl alcohol, polyethylene glycol, and cross-linked polyethylene glycol so that the insulating base has good insulating properties and a high weight-energy density.

In some embodiments, the insulating base is made of a composite material.

In some embodiments, the insulating base is made of a composite material formed from a polymeric material and an inorganic material, wherein the inorganic material is a ceramic material or a glass material, so that the insulating base has good mechanical processing performance and ductility.

In some embodiments, the support structure is continuously distributed along a first direction, the first direction being perpendicular to a thickness direction of the current collector, allowing the support structure to reduce the possibility of tape breakage of the current collector in a width direction and length direction.

In some embodiments, the support layer comprises a first end and a second end set opposite each other along a first direction, and the support structure is continuously distributed between the first end and the second end, enabling the support layer to enhance the overall strength of the current collector.

In some embodiments of the current disclose, and according to the invention, the support structure has a net-like projection along a thickness direction of the current collector, and the insulating base fills gaps in the support structure, so that the support structure can uniformly enhance the overall strength of the support layer.

In some embodiments, the support structure comprises a connection portion and at least two extension portions, the extension portions having a net-like projection along a thickness direction of the current collector, two adjacent the extension portions being spaced apart and connected by the connection portion, which is conducive to improving the effect of support structure on enhancing strength of the support layer.

In a second aspect, the present application provides an electrode plate comprising:
the current collector provided by any of the above technical solutions;
an active material layer, applied on the surface of the conductive layer.

In a third aspect, the present application provides a cell comprising an electrode plate provided by any of the above-described technical solutions.

In a fourth aspect, the present application provides a battery comprising a plurality of cells provided by the above-described technical solutions.

In a fifth aspect, the present application provides an electrical device comprising a cell provided by the above-described technical solution, the cell being used to provide electrical energy.

In a sixth aspect, the present application provides a method of manufacturing a current collector comprising the steps of:
forming an insulating base;
making a support structure in the insulating base to form a support layer; and
forming a conductive layer on each of two sides of the support layer.

In a seventh aspect, the present application also provides an apparatus for manufacturing the current collector comprising:
a feeding means for feeding an insulating base; and
a processing means for making a support structure in the insulating base to form a support layer and forming a conductive layer on each of two sides of the support layer.

The technical solutions provided by the present invention produces at least the following technical effects:
The present application provides a current collector which includes a conductive layer and a support layer, wherein the conducive layer is provided on a surface of the support layer comprising an insulating base and a support structure embedded in the insulating base. The support structure is used to enhance the strength of the support layer, so it not only increases the overall strength of the current collector and can improve the problem of tape breakage during processing, but also allows the strength of the support layer to be close to that of the conductive layer, narrowing the gap in structural strength between the support layer and the conductive layer, and reducing the difference in deformation between the conductive layer and the support layer during processing, so that it is conducive to improving processing performance of the current collector.

The present application provides an electrode plate, which can have an improved the strength and an improved processing performance because the electrode plate comprises the current collector provided by the above technical solution.

The present application provides a cell, which can have improved processing performance because the cell includes the electrode plate provided in the above technical solution.

The present application provides a battery, which can have improved processing performance because the battery comprises a plurality of the cells provided by the above-described technical solutions.

The present application provides an electrical device, which can have a better processing performance because the electrical device comprises a plurality of the cells provided by the above-described technical solutions.

The present application provides a method for processing and manufacturing a current collector, and the current collector as manufactured using the method has a better processing performance because the current collector manufactured using the method includes a support layer having a support structure.

The present application further provides an apparatus for processing and manufacturing a current collector, and the current collector as manufactured using the apparatus has a better processing performance because the current collector manufactured using the apparatus includes a support layer having a support structure.

The above description is only an overview of the technical solution of the present application. In order to understand more clearly the technical means of the present application, which can be implemented in accordance with the contents of the specification, and in order to make the above and other purposes, features and advantages of the present application more obvious and understandable, the following are specific embodiments of the present application.

### BRIEF DESCRIPTION OF DRAWINGS

In order to more clearly illustrate the technical solutions of embodiments of the present application, the following drawings are briefly described for use in the embodiments of the present application, and it is clear that the following drawings are only some embodiments of the present application, and that other drawings may be obtained from the accompanying drawings by person skilled in the art without any creative effort.
FIG. 1 is a structural schematic diagram of the vehicle provided in some embodiments of the present application.
FIG. 2 is an exploded view of the battery provided in some embodiments of the present application;
FIG. 3 is a decomposed structural schematic diagram of the cell provided in some embodiments of the present application;
FIG. 4 is a first schematic diagram of an internal structure of the current collector provided in some embodiments of the present application;
FIG. 5 is a second schematic diagram of an internal structure of the current collector provided in some embodiments of the present application;
FIG. 6 is a distribution schematic diagram of a support structure in the current collector provided in some embodiments of the invention;
FIG. 7 is a first schematic diagram of a closure curve formed by a support structure in the current collector provided in some embodiments of the invention;
FIG. 8 is a second schematic diagram of a closure curve formed by a support structure in the current collector provided in some embodiments of the invention;
FIG. 9 is a third schematic view of a closure curve formed by a support structure in the current collector provided in some embodiments of the invention;
FIG. 10 is a fourth schematic view of a closure curve formed by a support structure in the current collector provided in some embodiments of the invention;
FIG. 11 is a fifth schematic view of a closure curve formed by a support structure in the current collector provided in some embodiments of the invention;
FIG. 12 is a third schematic view of an internal structure of the current collector provided in some embodiments of the invention;
FIG. 13 is a first flow schematic diagram of the method of manufacturing a current collector provided by some embodiments of the present application;
FIG. 14 is a second flow schematic diagram of the method of manufacturing a current collector provided by some embodiments of the present application; and
FIG. 15 is a structural schematic diagram of the apparatus of manufacturing a current collector provided in some embodiments of the present application.

The accompanying drawings in specific embodiments are labeled as follows:
1 - support layer; 101 - insulating base; 102 - support structure; 121 - connection portion; 122 - extension portion; 2 - conductive layer; 100 - battery; 10 - case; 11 - first part; 12 - second part; 20 - cell; 21 - end cap; 21a - electrode terminal; 22 - housing; 23 - electrode assembly; 23a - positive electrode tab; 200 - controller; 300 - motor; 1000 - vehicle; 2000 - apparatus for manufacturing a current collector; 2100 - feeding means; 2200- processing device.

### DESCRIPTION OF EMBODIMENTS

The implementation of the present disclosure will be described in further detail below in conjunction with the accompanying drawings and embodiments. The detailed description of the following embodiments and drawings are used to exemplarily illustrate the principle of the present disclosure.

It is noted that, unless otherwise stated, technical terms or scientific terms used in embodiments of the present application shall have the common meaning as understood by a person skilled in the art to which the embodiments of the present application belong.

In the description of the present disclosure, the directions or positional relationships indicated by the terms such as "center", "longitudinal", "transverse", "length ", "width", "thickness", "upper", "lower", "front", "back", "left", "right", "vertical ", "horizontal", "top", "bottom", "inside", "outside", "clockwise", "counterclockwise", "axial", "radial", "circumferential" and the like are based on the direction or positional relationships shown in the accompanying drawings, and are intended only to facilitate and simplify the description of the present application embodiments, and do not indicate or imply that the involved device or element must have a specific orientation or must be configured or operated in the specific orientation, therefore, they cannot be understood as limiting the present disclosure.

In addition, the terms "first", "second" and the like are only used for descriptive purposes, and should not be interpreted as indicating or implying relative importance or implicitly specifying the number of technical features indicated. In the description of embodiments of the present application, "plurality" means more than two, unless otherwise expressly and specifically stated.

In the description of the present disclosure, it should also be stated, unless otherwise specified and limited, the terms "mounted", "connected to", "connected with", "fixed to" or the like should be understood in a broad sense. For example, a connection may refer to a fixed connection or a disassembly connection; or may refer to an integral connection; may refer to a mechanical connection or an electrically connection; or may refer to a direct connection or an indirect connection through an intermediate medium, either by a communication within two components or by the interaction of two components. For the ordinary person skilled in the art, the specific meanings of the above terms in the present disclosure may be understood according to specific situations.

In the description of embodiments of the present application, unless otherwise expressly specified and limited, a first feature is "on" or "under" a second feature may be where the first and second features are in direct contact, or where the first and second features are in indirect contact through an intermediate medium. Moreover, a first feature is "above", "over" and "upper" a second feature may be where the first feature is directly above or diagonally above the second feature, or simply indicates that the first feature is horizontally higher above the second feature. The first feature is "below", "under", and "lower" the second feature may be where the first feature is directly below or diagonally below the second feature, or simply indicates that the first feature is horizontally lower below the second feature.

At present, from the development of market, batteries are more and more widely used. Batteries are not only used in energy storage power systems such as hydro, thermal, wind and solar power plants, but also widely used in electric bicycles, electric motorcycles, electric cars and other electric vehicles, as well as military equipment and aerospace and many other fields. With the expansion of battery application fields, the demand of its market is also expanding.

The composite current collector used in the prior art for manufacturing batteries includes a support layer and a conductive layer, with the support layer used to carry the conductive layer and the conductive layer used to carry an electrode active material. This composite current collector can increase short-circuit resistance of batteries when a short-circuit occurs under abnormal conditions, so that short-circuit current is substantially reduced, and thus short-circuit heat production can be greatly reduced and safety performance of batteries can be improved.

The present inventors note that the support layer of this composite current collector is usually made of polymer materials or polymer composites using a process such as roll pressing, but this kind of material has the following disadvantages such as a low structural strength, prone to deformation, a low tensile strength, prone to breakage during processing although it is ductile in processing strength. In addition, its resilient degree during processing is greater than that of metals, making processing performance of the current collector poor and not easy to process.

**In** order to alleviate the problem of poor processing performance of the current collector, the inventors have found that the current collector can be improved for its overall strength by providing a support structure in the current collector. Specifically, an insulating base is set within a support layer of a current collector, and a support structure is set in the insulating base to enhance strength of the support layer, so as to narrow gap between structural strength of the support layer and structural strength of a conductive layer, which is conducive to reducing deformation gap between the conductive layer and the support layer during processing, thereby improving processing performance of the current collector.

Based on the above considerations, in order to improve processing performances of the current collector, the inventor, after an in-depth study, designed a current collector, by setting a support structure in a support layer of the current collector, to enhance structural strength of the support layer, so that structural strength of the support layer is close to structural strength of a conductive layer, which is not only conducive to reducing deformation gap between the conductive layer and the support layer during processing, but also can improve an overall structural strength of the current collector and improve the problem of tape breakage during processing, thus improving the processing performance of the current collector.

The current collector disclosed in the present application embodiment can be used to manufacture electrode plate without being limited thereto, and the current collector disclosed in the present application embodiment is coated with an active material on the surface of its conductive layer, in which the conductive layer has a small internal resistance in close contact with the active material, and is able to collect current generated by the active material to form a larger current output to the outside.

The current collector disclosed in this application embodiment can be used in, but not limited to, a rechargeable cell, which is a battery that can continue to be used by activating its active material by charging after the battery is discharged. The current collector disclosed in this application embodiment has good processing performance and thus the processing performance of cell is improved.

Embodiments of the present application provide a cell that can be, but is not limited to, used in an electrical device such as a vehicle, a ship, or a flying vehicle. The cell, battery, and the like disclosed in this application can be used to form a power supply system for the electrical device, which is beneficial to mitigate and automatically regulate deterioration of cell expansion force, replenish electrolyte consumption, and improve stability of battery performances and battery life.

Embodiments of the present application provide an electrical device using a battery as a power source, and the electrical device may be, but is not limited to, a cell phone, a tablet, a laptop computer, an electric toy, an electric tool, a battery car, a power car, a ship, a spacecraft, and the like. Among these, electric toys may include stationary or mobile electric toys, such as, for example, game consoles, electric car toys, electric ship toys, and electric aircraft toys, and so forth, and spacecraft may include aircraft, rockets, space shuttles, and spacecraft, and so forth.

The following embodiments are illustrated for ease of description, using an electrical device of an embodiment of the present application of a vehicle 1000 as an example.

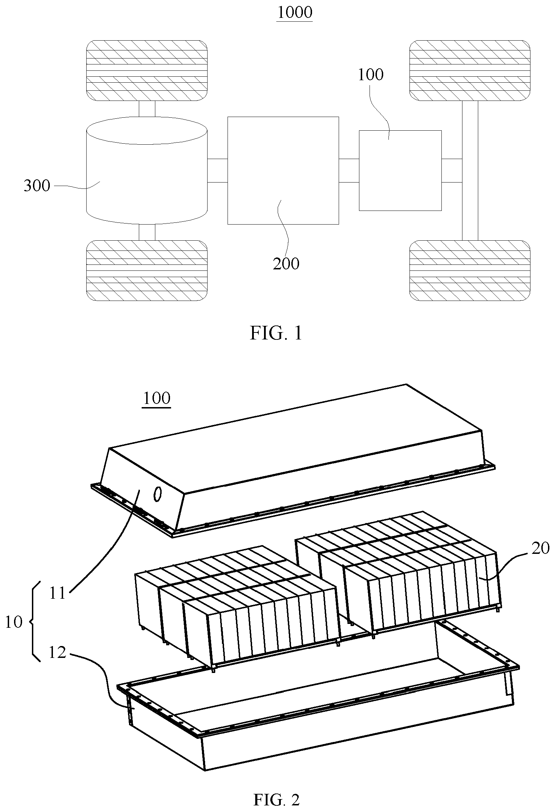

Referring to FIG. 1, FIG. 1 is a structural schematic diagram of the vehicle 1000 provided in some embodiments of the present application. The vehicle 1000 may be a fuel vehicle, a gas vehicle, or a new energy vehicle, and the new energy vehicle may be a pure electric vehicle, a hybrid vehicle, or an extended-range electric vehicle and the like. The vehicle 1000 is provided with a battery 100 inside, and the battery 100 can be provided at the bottom or head or tail of the vehicle 1000. The battery 100 can be used to power the vehicle 1000, for example, the battery 100 can be used as a power source for operating the vehicle 1000. The vehicle 1000 may also include a controller 200 and a motor 300, and the controller 200 is used to control the battery 100 to power the motor 300, for example, for power needs of the vehicle 1000 for starting, navigating, and working while driving.

In some embodiments of the present application, the battery 100 may not only serve as a power source for operation of the vehicle 1000, but may also serve as a drive power source for the vehicle 1000, in lieu of or in part in lieu of fuel or natural gas to provide drive power for the vehicle 1000.

Referring to FIG. 2, FIG. 2 provides an exploded view of the battery 100 provided in some embodiments of the present application. The battery 100 includes a case 10 and a cell 20, with the cell 20 housed within the case 10. In particular, the case 10 is used to provide a holding space for the cell 20, and the case 10 may be of various structures. In some embodiments, the case 10 may include a first portion 11 and a second portion 12, which are covered with each other so as to together define an accommodating space for accommodating the cell 20. The second portion 12 may be a hollow structure with an opening at one end, the first portion 11 may be a plate-like structure and the first portion 11 fits over the side of opening of the second portion 12 so that the first portion 11 and the second portion 12 together define a holding space. The first portion 11 and the second portion 12 each may also be a hollow structure with an opening at one end and the side of opening of the first portion 11 fits over the side of opening of the second portion 12. Of course, the case 10 formed by the first portion 11 and the second portion 12 may be of various shapes, such as a cylinder, a cuboid, and the like.

In the battery 100, a plurality of cells 20 may be present, and a plurality of cells 20 may be connected to each other in series or in parallel or in a mixed connection, in which the mixed connection refers to a plurality of cells 20 are connected in both series and parallel. A plurality of cells 20 can be directly connected in series or parallel or mixed together, and then the plurality of cells form a single unit and the single unit is housed in the case 10. Of course, the battery 100 can also be such a structure where a plurality of cells 20 first are connected in series or parallel or mixed to form a form of battery module, a plurality of battery modules and then are connected in series or parallel or mixed to form a single unit, and then the single unite is housed in the case 10. The battery 100 may also include other structures, for example, the battery 100 may further include a busbar component for achieving an electrical connection between the plurality of cells 20.

The cell 20 each may be a secondary or primary battery; and it may also be, but not limited to, a lithium-sulfur, sodium-ion, or magnesium-ion battery. The cell 20 may be in shape of cylinder, a flat body, cuboid, or other shapes.

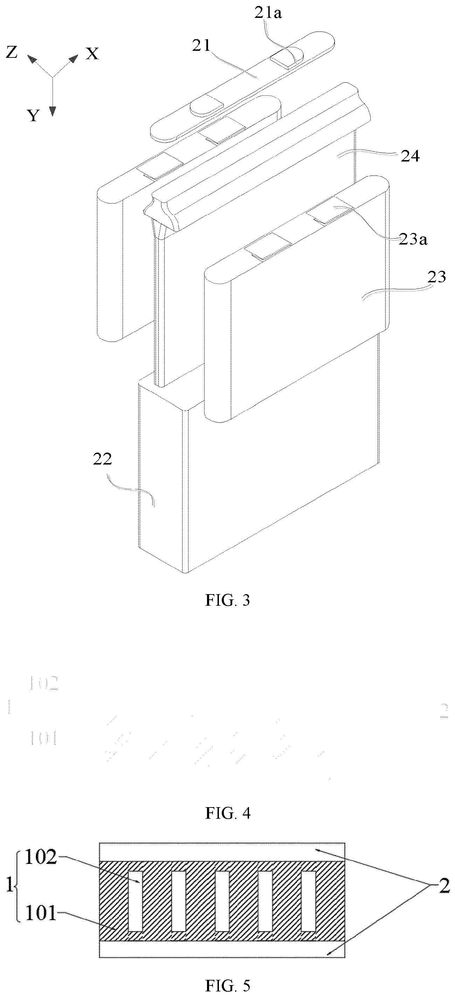

Referring to FIG. 3, FIG. 3 is a schematic diagram of exposed structure of the cell 20 provided in some embodiments of the present application. A cell 20 is the smallest unit that makes up a battery. As shown in FIG. 3, the cell 20 includes an end cap 21, a housing 22, a core assembly 23, and other functional components.

The end cap 21 is a component that fits over an opening in the housing 22 to isolate the internal environment of the cell 20 from the external environment. Without limitation, the shape of the end cap 21 can be adapted to the shape of the housing 22 to fit the housing 22. Optionally, the end cap 21 may be made of a material with a certain hardness and strength (e.g., aluminum alloy), so that the end cap 21 is less likely to deform when subjected to crushing and collision, thereby enabling the cell 20 to have higher structural strength and improved safety performance. The end cap 21 can be provided with functional components such as electrode terminals 21a. The electrode terminal 21a can be used to electrically connect to the core assembly 23 for outputting or inputting electrical energy to the cell 20. In some embodiments, the end cap 21 may also be provided with a pressure relief mechanism for releasing internal pressure of the cell 20 when the internal pressure or temperature of the cell 20 reaches a threshold value. The end cap 21 may also be made of a variety of materials, such as, for example, copper, iron, aluminum, stainless steel, aluminum alloy, plastic, and the like, which is not particularly limited in embodiments of the present application. In some embodiments, an insulating member may also be provided on the inside of the end cap 21, and the insulating member may be used to isolate electrically connected components inside the housing 22 from the end cap 21 to reduce the risk of short circuit. As an example, the insulating member may be made of plastic, rubber, and the like.

The housing 22 is a component for fitting the end cap 21 to form an internal environment of the cell 20, wherein the formed internal environment may be used to accommodate a core assembly 23, electrolyte, and other components. The housing 22 and the end cap 21 may be separate components, in which an opening may be provided in the housing 22 and the end cap 21 fits over the opening to form an internal environment of the cell 20. Not intended to limit, it is also possible to make the end cap 21 and the housing 22 integrated. Specifically, the end cap 21 and the housing 22 may form a common joint surface before other components are placed into the housing, and then the end cap 21 is made to fit over the housing 22 when the interior of the housing 22 needs to be encapsulated. The housing 22 may be of various shapes and various sizes, such as cuboid, cylinder, hexagonal prism, etc. Specifically, the shape of the housing 22 can be determined based on the specific shape and size of the core assembly 23. The housing 22 may be made of a variety of materials, such as, but not particularly limited to in embodiments of the present application, copper, iron, aluminum, stainless steel, aluminum alloy, plastic, and the like.

The core assembly 23 consists of a positive electrode plate, a negative electrode plate, and a separator. The cell relies primarily on the movement of metal ions between the positive and negative electrode plates to operate. In some embodiments, the positive electrode plate includes a positive electrode current collector and a positive electrode active material layer, in which the positive electrode active material layer is applied to the surface of the positive electrode current collector, the positive electrode current collector without the positive electrode active material layer is protruding from the positive electrode current collector with the positive electrode active material layer, and the positive electrode current collector without the positive electrode active material layer is used as the positive electrode tab 23a. In the case of lithium-ion batteries, for example, the material of the positive electrode current collector may be aluminum, and the positive electrode active material can be lithium cobalt oxide, lithium iron phosphate, ternary lithium or lithium manganese oxide and the like. The negative electrode plate includes a negative electrode current collector and a negative electrode active material layer, in which the negative electrode active material layer is applied to the surface of the negative electrode current collector; the negative electrode current collector includes a negative electrode coating area and a negative electrode tab 23a connected to the negative electrode coating area, and the negative electrode coating area is coated with a negative electrode active material layer, and the negative electrode tab is not coated with a negative electrode active material layer. The material of the negative electrode current collector can be copper, the negative electrode active material layer includes a negative electrode active material, and the negative electrode active material can be carbon or silicon, and the like. The material of the separator can be PP (polypropylene) or PE (polyethylene), and the like. In addition, the core assembly 23 can be a winding structure or a stacking structure, and embodiments of the present application are not limited thereto. The current collector described below can be applied to the positive electrode current collector or to the negative electrode current collector. The portion of the positive electrode plate and negative electrode plate with the active material constitutes the main body of the core assembly and the positive electrode tab 23a and the negative electrode tab 23a can be located together at one end of the main body or at both ends of the main body. During the charging and discharging process of batteries, the positive electrode active material and negative electrode active material react with the electrolyte, and the tab 23a is electrically connected to the electrode terminal to lead off electrical energy.

According to some embodiments of the present application, FIG. 4 shows a first schematic view of internal structure of the current collector provided in some embodiments of the present application, and FIG. 5 shows a second schematic view of internal structure of the current collector provided in some embodiments of the present application, wherein FIG. 4 and FIG. 5 show the state in which the support structure 102 is connected with two conductive layers 2 and the state in which the two conductive layers 2 are separated, respectively. The present application provides a current collector, comprising a support layer 1 and a conductive layer 2 provided on a surface of the support layer 1, in which the support layer 1comprises an insulating base 101 and a support structure 102 embedded in the insulating base 101 to enhance strength of the support layer 1.

FIGS. 4 and 5 both show schematic diagrams of internal structure of the current collector in its thickness direction.

The support layer 1 is a laminar structure for carrying the conductive layer 2, and the material of the insulating base 101 in the support layer 1 can be an organic polymer insulating material, an inorganic insulating material, or a composite material.

The conductive layer 2 is a layer of material for carrying an active material, and the material of the conductive layer 2 is selected from a metal conductive material or a carbon based conductive material, in which the metal conductive material is preferably at least one of aluminum, copper, nickel, titanium, silver, nickel-copper alloy, and aluminum-zirconium alloy, and the carbon based conductive material is preferably at least one of graphite, acetylene black, graphene, and carbon nanotubes. The conductive layer 2 is formed on the support layer by at least one of mechanical rolling, bonding, vapor deposition method, and chemical plating. The vapor deposition method is preferably a physical vapor deposition method, wherein the physical vapor deposition method is preferably at least one of evaporation method and sputtering method, the evaporation method is preferably at least one of vacuum vapor deposition method, thermal evaporation method, electron beam evaporation method, and the sputtering method is preferably magnetron sputtering method. In some embodiments of the present application, the conductive layer 2 is preferably made by one of vapor deposition method or chemical plating to form a strong bond between the support layer 1 and the conductive layer 2.

The conductive layer 2 not only has a low resistance to enable the formed battery 100 to have a low internal resistance, but also is in sufficient contact with an active material so that it is capable of pooling the current generated by the active material.

"The surface of the support layer 1" refers to a surface of the support layer 1 that is perpendicular to its thickness direction, and a conductive layer 2 is provided on the surface of the support layer 1 to enable the support layer 1 and the conductive layer 2 to jointly form a current collector having a conductive and convergent function.

"The support structure 102 is embedded in the insulating base 101" means that the support structure 102 is at least partially placed in the insulating base 101. That is, the insulating base 101 is at least wrapped over part of the surface of the support structure 102, and the insulating base 101 and the support structure 102 located in the insulating base 101 together form a support layer 1.

By increasing strength of the support layer 1 by embedding the support structure 102 in the insulating base 101, not only increases an overall strength of the current collector and can improve the problem of tape breakage during processing, but also allows strength of the support layer 1 to be close to strength of the conductive layer 2, narrowing the gap between structural strength of the support layer 1 and structural strength of the conductive layer 2, and reducing a deformation gap between the conductive layer 2 and the support layer 1 during processing, thereby improving processing performances of the current collector.

In some embodiments of the present application, the support layer 1 has a Young's modulus in the range of from 4GPa≤E≤20GPa, wherein E is the Young's modulus of the support layer 1.

The Young's modulus of the support layer 1 is measured as follows:

A sample of support layer 1 was taken and cut into a rectangle of 15 mm × 200 mm.

The sample was measured for its thickness h using a high precise micrometer, wherein the unit of the thickness h of the sample is in µm.

A tensile test is performed under normal temperature and pressure using a Go-Tech tensile machine, where an initial position is set so that the sample length between the clamps is 50mm; the sample is stretched at a speed of 50 mm/min in which the load L at which break occurs due to stretching, and the displacement y of the instrument are recorded, where the load L is in N and the displacement y is in mm; and a stress-strain curve is plotted on the basis of stress ε(GPa)=L/(15× h)*1000 and strain η=y/50*100, and the curve of the initial linear region is taken to determine the slope of this curve, i.e. Young's modulus E of the support layer 1.

The Young's modulus of the support layer 1 is in the range of 4GPa≤E≤20GPa and the Young's modulus of the support layer 1 within the above range makes the support layer 1not only strong enough and but also flexible. The Young's modulus of support layer 1 shall not be too high. If the Young's modulus E of the support layer 1 is greater than 20GPa, the rigidity of the support layer 1 will be too high, causing winding and rolling-up of the current collector to be difficult, and thus degrading the processing performance. The Young's modulus of the support layer 1 shall not be too low. If the Young's modulus E of support layer 1 is less than 4GPa, the rigidity of the support layer 1 will be too low, so that support layer 1 could neither narrow the gap in structural strength between the support layer 1 and the conductive layer 2, nor enhance strength of the current collector.

In some embodiments, the Young's modulus of the support layer 1 is in the range of 8GPa≤E≤16GPa. In some embodiments, the Young's modulus of the support layer 1 is in the range of 10GPa≤E≤13GPa. The support layer 1 having a Young's modulus within the defined range has sufficient strength, which is capable of improving the problem of tape breakage of the current collector during processing, reducing the deformation gap between the conductive layer 2 and the support layer 1 during processing, and helping improve processing performances of the current collector.

In some embodiments, as shown in FIG. 4, both surfaces of the support layer 1 are provided with a conductive layer 2, and a support structure 102 in the support layer 1 connects the conductive layers 2 on both surfaces of the support layer 1.

"Both surfaces of the support layer 1" refers to two surfaces of the support layer 1 that are perpendicular to its thickness direction, which are parallel and spaced apart, and are surfaces that the support layer 1 has as a structure itself.

As shown in Figure 5, in some embodiments, the support structure 102 is not connected to the conductive layer 2, and the insulating base 101 is wrapped around the support structure 102 from the outside to separate the support structure 102 from the conductive layer 2. The support structure 102 is used to enhance strength of the support layer 1 that carries the conductive layer 2, and the support layer 1 acts as a support and protection for the conductive layer 2.

In some embodiments, the conductive layer 2 is made of metal, and the thickness range of the individual conductive layer 2 is set to 30 nm ≤ D ≤ 3 µm, where D is the thickness of the conductive layer 2. The conductive layer 2 is capable of conducting and collecting electrical current, and used for providing electrons to an active material layer of the electrode plate.

By connecting the conductive layers 2 on two surfaces of the support layer 1, the conductive layer 2 can play a supporting role for the support structure 102, increasing the role of the support structure 102 in increasing strength of the support layer 1, and can further increase strength of the support layer 1.

In some embodiments of the present application, the Young's modulus of the support structure 102 is greater than the Young's modulus of the insulating base 101.

Young's modulus is an elasticity modulus along a longitudinal direction and is also a term used in mechanics of materials. According to Hooke's law, within an elastic limit of an object, a stress is proportional to a strain, and their ratio is known as a Young's modulus of a material, which is a physical parameter that characterizes properties of a material and depends only on physical properties of the material itself. The magnitude of Young's modulus signifies stiffness of a material; the higher the Young's modulus, the less susceptible it is to deformation.

By making the Young's modulus of the support structure 102 larger than the Young's modulus of the insulating base 101, the support structure 102 embedded in the insulating base 101 is capable of enhancing Young's modulus of the support layer 1, which has the effect of increasing strength of the support layer 1, bringing the strength of the support layer 1 closer to the strength of the conductive layer 2, and thereby reducing the gap between the structural strength of the support layer 1 and the structural strength of the conductive layer 2.

In some embodiments of the present application, the support structure 102 is made of a conductive material.

Conductive materials are materials that can be used to transport and conduct electrical currents. Such materials have a large number of charged particles that are able to move freely under the action of an electric field, and thus are materials that can conduct electric currents well.

The support structure 102 is made of a conductive material, so that the support structure 102 is electrically conductive and can electrically connect the conductive layers 2 on both surfaces of the support layer 1. The conductive network formed by the support structure 102 can improve transmission efficiency of electrons, improve the electrical properties such as current carrying capability of the current collector , and reduce the resistance of electrode plates containing the current collector, thereby effectively reducing the DC internal resistance of the cell core, improving power performance of the cell core, and enabling the cell core less prone to high polarization and lithium precipitation during long-term cycling, which can improve the long-term reliability of the cell core.

In some embodiments of the present application, the support structure 102 is made of at least one of aluminum, copper, nickel, titanium, silver, nickel-copper alloy, aluminum-zirconium alloy, aluminum-lithium alloy, titanium-aluminum alloy, magnesium alloy, beryllium alloy, and titanium alloy.

It will be appreciated that the support structure 102 may be made of other common metallic materials in addition to those provided in the foregoing technical solutions, and the choice of materials for making the support structure 102 may be made by a person skilled in the art according to the actual situation.

The support structure 102 is made of the metal material provided by the preceding technical solution, which enables the support structure 102 to have excellent electrical conductivity, improves current-carrying capacity of the current collector, and also enhances strength of the support layer 1. Preferably, the support structure 102 is made of nickel or nickel-copper alloy, which enables the support structure 102 to provide not only sufficient strength but also good corrosion resistance.

In some embodiments, the support structure 102 may also be made of at least one of high performance conductive fiber materials such as poly-carbon fibers, graphite fibers, silicon carbide fibers, and the like. That is, the support structure 102 may also be made of a non-metallic material having conductivity, and a person skilled in the art may choose materials of the support structure 102 according to the actual situation.

The support structure 102 may be made by at least one of mechanical rolling, bonding, vapor deposition method, chemical plating, or laser etching.

Mechanical rolling, bonding, vapor deposition method, chemical plating and laser etching are all methods of processing metals, which are existing processing methods and can be selected by those skilled in the art according to the actual situation, and whose specific working principles are not repeated here.

Mechanical rolling, bonding, vapor deposition, chemical plating, or laser etching is used to build the support structure 102 in the support layer 1 in order to form the support structure in the support layer 1. Preferably, the support structure 102 is built in the support layer 1 using the vapor deposition for the reason that the support structure 102 formed by the vapor deposition is firmly attached to the insulating base 101, and also that those skilled in the art have a high degree of proficiency in the vapor deposition method, which facilitates obtaining the support structure 102 in the support layer 1.

In some embodiments, the support structure 102 is made of a high performance fiber material.

High-performance fibers are generally defined as fibers having a strength greater than 17.6 cN/dtex and an elasticity modulus of 440 cN/dtex or greater. High-performance fibers are a new generation of synthetic fibers with high strength, high modulus, and high temperature resistance developed by fiber science and engineering community. High-performance fibers have special properties not found in ordinary fibers and are mainly used in various fields of military and high-tech industries.

The support structure 102 is made of high performance fiber material, which makes the support structure 102 have better mechanical properties and corrosion resistance.

In some embodiments, the support structure 102 is made of at least one of poly-p-phenylene terephthalamide fibers, aromatic polyamide copolymer fibers, heterocyclic polyamide fibers, carbon fibers, graphite fibers, and silicon carbide fibers.

Among them, poly-p-phenylene terephthalamide fiber is a synthetic fiber spun from an all-aromatic polyamide with repeating units. Aromatic polyamide copolymer fibers are synthetic fibers spun from a class of linear polyamides containing aromatic rings, which are classified into all-aromatic polyamide fibers and aliphatic polyamide fibers containing aromatic rings. Heterocyclic polyamide fibers are an amide polymer containing a heterocyclic structure in its molecular chain. Carbon fibers are high-strength, high-modulus fibers with a carbon content of 90% or more. Graphite fibers are fibers with a layered hexagonal lattice graphite structure having a graphitized molecular structure and a carbon content above 99%. Silicon carbide fibers are inorganic fibers with a β-silicon carbide structure made from organic silicon compounds by spinning, carbonization or vapor deposition.

The support structure 102 is made of the above-defined high-performance fiber material, which can improve strength of the support layer 1, narrow gap between the structural strength of the support layer 1 and the structural strength of the conductive layer 2, and facilitate reduction of the deformation gap between the conductive layer 2 and the support layer 1 during processing, thereby improving processing performance of the current collector. Preferably, the support structure 102 is made of carbon fiber, which not only provides sufficient strength, but also makes the support structure 102 have good electrical conductivity and can improve current-carrying capability of the current collector.

In some embodiments, the insulating base 101 is made of a polymeric material.

Polymeric materials, also known as polymer materials, are materials composed of a polymeric compound as a base with other additives (auxiliaries).

The polymeric material has a low density, which helps to reduce density of the insulating base 101, thereby facilitating improvement of weight energy density of the battery 100. The insulating base 101 of polymeric material has good insulation, which can increase short-circuit resistance of the battery 100 when a short circuit occurs under abnormal conditions, reduce short-circuit current to reduce heat production during the short circuit, and improve safety performance of the battery 100.

In some embodiments, the insulating base 101 is made of at least one of polyamide, polyterephthalate, polyimide, polyethylene, polypropylene, polystyrene, polyvinyl chloride, aramid, polydimethylene phthamide, acrylonitrile-butadiene-styrene copolymer, polybutylene terephthalate, poly-p-phenylene terephthamide, ethylene-propylene rubber, polyformaldehyde, epoxy resin, phenolic resin, polytetrafluoroethylene, polyphenylene sulfide, polyvinylidene fluoride, silicone rubber, polycarbonate, cellulose, cellulose derivative, starch, starch derivative, protein, protein derivative, polyvinyl alcohol, cross-linked polyvinyl alcohol, polyethylene glycol, and cross-linked polyethylene glycol.

It is noted that polyamide, polyterephthalate, polyimide, polyethylene, polypropylene, polystyrene, polyvinyl chloride, aramid, polydimethylene phthamide, acrylonitrile-butadiene-styrene copolymer, polybutylene terephthalate, poly-p-phenylene terephthamide, ethylene-propylene rubber, polyformaldehyde, epoxy resin, phenolic resin, polytetrafluoroethylene, polyphenylene sulfide, polyvinylidene fluoride, silicone rubber, polycarbonate, cellulose, cellulose derivative, starch, starch derivative, protein, protein derivative, polyvinyl alcohol, cross-linked polyvinyl alcohol, polyethylene glycol, and cross-linked polyethylene glycol are all existing polymeric materials, the definitions of which are not repeated herein.

The above-defined materials for making the insulating base 101 have a low density and good insulating properties, which ensure that the support layer 1 meets the requirements for insulating and carrying the conductive layer 2. Preferably, the insulating base 101 is made of at least one of polyterephthalate, polyimide, polyethylene, and polypropylene, all of which are commonly used insulating materials in the art, easily available, and less costly.

In some embodiments, the insulating base 101 is made of a composite material.

Composite materials are new materials made by people using advanced material preparation techniques to optimize the combination of material components with different properties.

The use of composite materials to make the insulating base 101 not only makes the insulating base 101 have good chemical resistance, but also makes the insulating base 101 able to meet the requirements of a variety of complex mechanical properties, exhibiting good mechanical processing performance and ductility.

In some embodiments, the insulating base 101 is made of a composite material formed by a polymeric material and an inorganic material, wherein the inorganic material is a ceramic material or a glass material.

Inorganic materials refer to materials made from inorganic materials alone or mixed with other materials. It usually refers to materials prepared by certain processes from raw materials such as silicates, aluminates, borates, phosphates, germanates, and/or oxides, nitrides, carbides, borides, sulfides, silicides, halides, and the like. Among them, the ceramic material is a class of inorganic non-metallic materials made from natural or synthetic compounds through forming and high temperature sintering. It has the advantages of high melting point, high hardness, high wear resistance and oxidation resistance. It can be used as structural materials, knife materials, as ceramics also have certain special properties, and can be used as functional materials. Glass materials are amorphous inorganic non-metallic materials, generally made from a variety of inorganic minerals (such as quartz sand, borax, boric acid, barite, barium carbonate, limestone, feldspar, soda ash, and the like) as the main raw material, in addition to a small amount of auxiliary raw materials.

The insulating base 101 made from composite materials formed by using polymeric materials and inorganic materials has high strength and good durability, which is conducive to prolonging service life of the current collector.

Whether made of a polymer material or a composite material, the insulating base 101 reduces the content of metallic aluminum per unit area in the thickness direction of the current collector, which reduces the probability of metal burr generation in the event of abnormal conditions such as nail penetration, which in turn reduces the probability of violent aluminum thermal reactions, and contributes to the safety performance of electrochemical devices containing the current collector.

In some embodiments of the present application, the support structure 102 is continuously distributed along a first direction, wherein the first direction is a direction perpendicular to the thickness direction of the current collector.

Among them, the first direction may be a length direction of the current collector or a width direction of the current collector, and the support structure 102 may be continuously distributed along the length direction of the current collector and may also be continuously distributed along the width direction of the current collector.

The continuous distribution of the support structure 102 along the first direction allows the support structure 102 to continuously enhance strength of the current collector, reducing the possibility of tape breakage of the current collector. In this embodiment, the support structure 102 is continuously distributed along both the length direction and the width direction of the current collector, which allows the support structure 102 to reduce the possibility of tape breakage of the current collector in both the width direction and the length direction.

In some embodiments of the present application, the support layer 1·comprises a first end and a second end set opposite each other along a first direction, and the support structure 102 is continuously distributed between the first end and the second end.

It is to be noted that since the first direction can be a length direction of the current collector or a width direction of the current collector, the first end and the second end can be two ends distributed along the length direction of the current collector and also two ends distributed along the width direction of the current collector.

By distributing the support structure 102 continuously between the first end and the second end, allows the support structure 102 to be distributed throughout the support layer 1 along the arrangement direction of the support layer 1, thereby enhancing strength of the entire current collector and avoiding the situation where strength of the ends of the current collector is not enhanced.

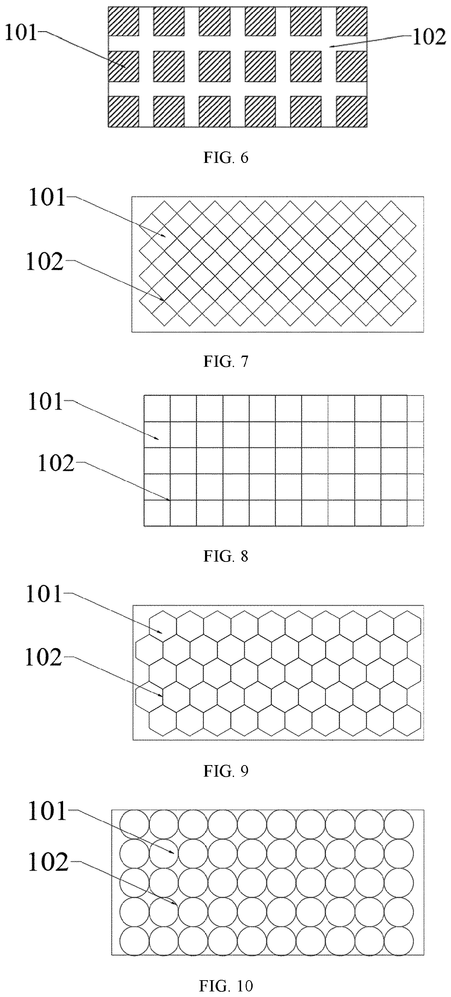

In some embodiments of the present invention, as shown in FIG. 6, the support structure 102 has a net-like projection along a thickness direction of the current collector, and the insulating base 101 fills gaps in the support structure 102.

"The support structure 102 has a net-like projection" means that the projection of the support structure 102 along a thickness direction of the current collector forms a plurality of interconnected closed curves. As shown in FIGS. 7 to 11, the closed curves include regular or irregular figures. Among them, the figures enclosed by the closed curves can be one or more of a circle, an ellipse, a polygon, a polygon with circumscribed circle, a polygon with inscribed circle, and a sector. The number of the polygon sides ranges from 3 to 40, and the lengths of the polygon sides may be equal or unequal to each other. In this embodiment, the lengths of the polygon sides are preferably equal to each other, so that the closure curve is a regular polygon. Making the closed curve into the regular figure is conducive to making the support structure 102 structurally stable. It is understood that the figure enclosed by the closed curve is preferably one of a circle, a square triangle, or a square, which facilitates practical forming of the closure curve.

The straight line segments in the closure curve is configured to have a line length in the range of from 0.5mm to 5mm, and the curved line segments in the closure curve is configured to have a curvature radius in the range of from 0.25mm to 2.5mm. When the figure enclosed by the closure curve is a circle, the enclosed circle is configured to have a diameter of from 0.5mm to 5mm; when the figure enclosed by the closed curve is elliptical, the enclosed ellipse is configured to have long and short axes with a length of from 0.5mm to 5mm, and the length of the short axis is less than the length of the long axis; when the figure enclosed by the closed curve is a polygon, the polygon is configured to have a length of each sides of from 0.5mm to 5mm; when the figure enclosed by the closed curve is a polygon with circumscribed circle, or a polygon with inscribed circle, the circle is configured to have a diameter of from 0.5mm to 5mm, and the polygon is configured to have a length of each sides of from 0.5 mm to 5mm; and when the figure enclosed by the closed curve is a sector, the sector is configured to have a radius range of from 0.25mm to 2.5mm.

The "gaps in the support structure" refers to the areas enclosed by the closure curves and also the areas among adjacent closure curves. The insulating base fills these areas and constitutes the support layer 1 with the support structure 102, which avoids gaps in the support layer 1 and helps to ensure continuity of the support layer 1 and support to the conductive layer 2.

The support structure 102 is distributed in the form of a net in the insulating base 101, so that the support structure 102 can be uniformly distributed in the support layer 1 and can uniformly enhance strength of the support layer 1, so that an overall strength of the support layer 1 is uniformly distributed.

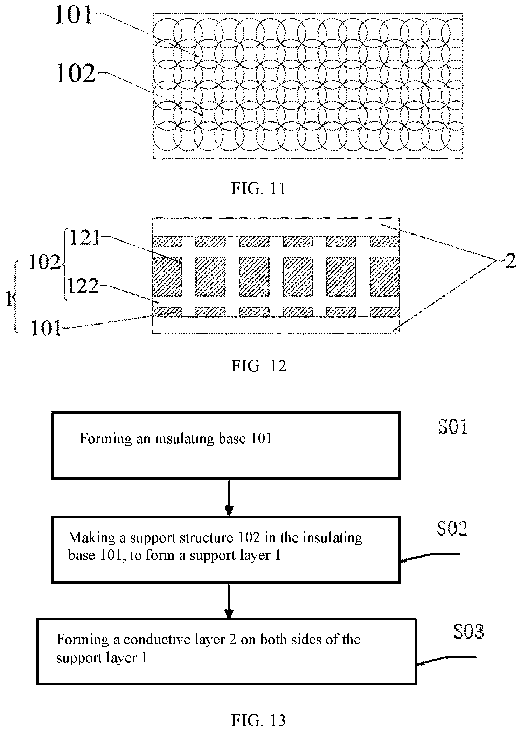

In some embodiments of the present invention, as shown in FIG. 12, the support structure 102 includes a connection portion 121 and at least two extension portions 122, the extension portions 122 having a net-like projection along a thickness direction of the current collector, and two adjacent extension portions 122 being spaced apart and connected by the connection portion 121.

The connection portion 121 is a portion connected between two adjacent extension portion 122, and its main function is to connect the two adjacent extension portion 122 so as to connect at least two extension portions 122 into a single unit, which is conducive to improving effect of the support structure 102 in enhancing strength of the support layer 1.

It is understood that the extension portions 122 may be provided in three, four or more, and are spaced layer by layer in a thickness direction of the support layer 1, and that the two adjacent extension portions 122 are connected by the connection portion 121.

The extension portions 122 having a net-like projection along a thickness direction of the current collector means that the projection of the extension portions 122 along a thickness direction of the current collector forms a plurality of interconnected closure curves, which can uniformly enhance an overall strength of the support layer 1.

The support structure 102 is provided with at least two extension portions 122, enabling the support structure 102 to further enhance structural strength and ductility through multiple layers of extension portions 122, which is conducive to reducing the occurrence of tape breakage and improving processing performances; and the connection portion 121 connects the at least two extension portions 122 into a monolithic structure, which is conducive to improving the effect of the support structure 102 on enhancing strength of the support layer 1.

According to some embodiments of the present application, the present application also provides an electrode plate comprising the current collector provided in any of the above technical solutions and an active material layer (not shown), the active material layer being applied to the surface of the conductive layer 2.

Since the electrode plate includes the current collector provided in the above technical solutions, the electrode plate has not only improved strength but also improved processing performance.

Since the electrode plate includes the current collector provided in the above-described technical solution, the support structure 102 in the current collector can reduce the process steps for processing the current collector into the electrode plate. When the conductive layer 2 on both surfaces of the support layer 1 is not conductive, it is not possible to cut out an electrode tab directly using the current collector, and additional processing steps are required to construct a pathway device connecting the conductive layer 2 on both surfaces of the support layer 1 at the electrode tab. Since it is necessary for the pathway device to weld the conductive layer 2 to an aluminum foil, it is prone to bending in the weld mark area, which reduces heat dissipation efficiency, produces metal particles and burrs, and affects energy density of the battery 100. While in the present application, it is not necessary to set up a pathway device for the electrode plate since it includes the current collector provided in the above technical solution, and the support structure 102 is able to conduct the conductive layer 2 on both surfaces of the support layer 1.

According to some embodiments of the present application, the present application also provides a cell including the electrode plate provided in the technical solution described above.

Since the cell includes the electrode plate provided in the above-described technical solutions, the cell can have an improved processing performance.

According to some embodiments of the present application, the present application also provides a battery 100 that includes a plurality of cells provided in the above-described technical solutions.

Since the battery 100 includes the cell provided in the above-described technical solutions, the battery 100 has a better processing performance.

According to some embodiments of the present application, the present application also provides an electrical device comprising the cell provided in the above-described technical solution, which is used to provide electrical power to the electrical device.

The electrical device may be an apparatus or system for applying the battery 100 as described in any of the foregoing.

According to some embodiments of the present application, as shown in FIG. 4, the current collector includes a support layer 1 and two conductive layers 2, the two conductive layers 2 being provided on both surfaces of the support layer 1 opposite with each other, the support layer 1 including an insulating base 101 and a support structure 102, the support structure 102 being embedded in the insulating base 101, and the support structure 102 being connected between the two conductive layers 2, the support structure 102 has a Young's modulus that is greater than that of the insulating base 101, which enables the support structure 102 to enhance strength of the support layer 1. As shown in FIG. 6, the projection of the support structure 102 along a thickness direction of the current collector is in the shape of a net, and the mesh is square, and the insulating base 101 is filled in the square mesh. The support structure 102 is continuously distributed between two ends in a length direction of the current collector and between two ends in a width direction of the current collector for enhancing an overall strength of the current collector.

In the above technical solution, because the conductive layer 2 made of metal is more rigid than that made of polymeric materials or polymeric composites, and has less deformation in processes such as roll pressing of current collector or electrode plate, the addition of a high strength support structure 102 in the support layer 1 can reduce the difference in deformation between the support layer 1 and the conductive layer 2 and reduce the possibility of tearing of the conductive layer 2. The normal temperature Young's modulus of the support layer 1 meets: 4GPa≤E≤20GPa, making the support layer 1 have a certain rigidity, which can improve rigidity matching between the support layer 1 and the conductive layer 2, thus reducing the difference of deformation between the support layer 1 and the conductive layer 2 during processing of current collector and electrode plate; during processing of current collector and electrode plate, the current collector is not easy to deform or extend too much, which makes the support layer 1 and the conductive layer 2 bind firmly so as not easy to detach from each other, but also prevents the conductive layer 2 from breakage with the extension of the support layer 1. Moreover, the current collector having a certain toughness can make the current collector and electrode plate have a certain ability to withstand deformation so as not easy to break.

According to some embodiments of the present application, the present application also provides a method of manufacturing a current collector, as shown in FIG. 13, which comprises the steps of:
S01: forming an insulating base 101.

That is, an insulating base 101 is first formed in the current collector as a carrier for carrying other structures.

S02: processing a support structure 102 in the insulating base 101 to form a support layer 1.

That is, a support structure 102 is formed in the insulating base 101 by processing, which is embedded in the insulating base 101, thereby forming the support layer 1.

S03: forming a conductive layer 2 on each of both sides of the support layer 1.

That is, a conductive layer 2 for conducting electricity is formed on both sides of the support layer 1 having the support structure 102.

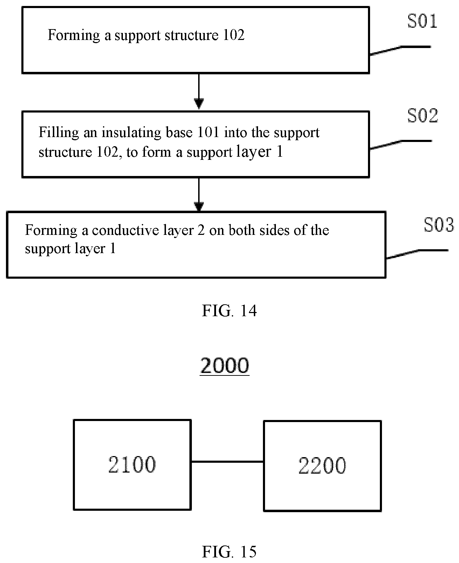

As shown in FIG. 14, a method of manufacturing the current collector may further include the steps of:
S01: forming a support structure 102.

That is, the support structure 102 is formed first.

S02: filling the support structure 102 with an insulating base 101 to form a support layer 1.

That is, the area where the support structure 102 is located and gaps in the support structure 102 are filled with the insulating base 101 to form a support layer 1.

S03: A conductive layer 2 is formed on each of both sides of the support layer 1.

That is, a conductive layer 2 for conducting electricity is formed on both sides of the support layer 1 having the support structure 102.

By the above method of manufacturing the current collector, it is possible to process a current collector having a support structure 102 within its support layer 1. The current collector has a greater overall strength and can improve the problem of tape breakage during processing of current collector, and also enables strength of the support layer 1 to be close to the strength of the conductive layer 2, narrowing the gap between structural strength of the support layer 1 and structural strength of the conductive layer 2, and reducing the difference in deformation between the conductive layer 2 and the support layer 1 during processing, so that the processing performance of the current collector is improved.

According to some embodiments of the present application, the present application also provides an apparatus 2000 for manufacturing a current collector, as shown in FIG. 15, which includes a feeding means 2100 and a processing means 2200, the feeding means 2100 is used for feeding an insulating base 101, and the processing means 2200 is used for processing a support structure 102 in the insulating base 101 to form a support layer 1, and for forming a conductive layer 2 on each of both sides of the support layer 1.

In addition, the processing means 2200 in the apparatus 2000 for manufacturing a current collector processes a support structure 102 in a designated space is processed by , the feeding means 2100 for feeding the insulating base 101 fills the area where the support structure 102 is located and the gaps in the support structure 102 to form a support layer 1, and the processing means 2200 forms the conductive layer 2 on each of both sides of the support layer 1.

The apparatus 2000 for manufacturing a current collector can make a current collector with a support structure 102 in its support layer 1. The current collector has a greater overall strength and can improve the problem of tape breakage of current collector during processing, and also enables the strength of the support layer 1 to be close to the strength of the conductive layer 2, narrowing the gap in structural strength between the support layer 1 and the conductive layer 2, and reducing the difference in deformation between the conductive layer 2 and the support layer 1 during processing.

## Claims

1. A current collector comprising:
a support layer (1) comprising an insulating base (101) and a support structure (102), the support structure (102) being embedded in the insulating base (101) to enhance strength of the support layer (1); and
a conductive layer (2), provided on a surface of the support layer (1), wherein the surface of the support layer (1) is a surface of the support layer (1) that is perpendicular to its thickness direction;
**characterized in that**, the support structure (102) has a net-like projection along a thickness direction of the current collector, and the insulating base (101) fills gaps in the support structure (102).

2. The current collector as claimed in claim 1, wherein the support layer (1) has a Young's modulus in the range of from 4GPa≤E≤20GPa.

3. The current collector as claimed in claim 1 or 2, wherein the conductive layer (2) is provided on both surfaces of the support layer (1), and the support structure (102) connects the conductive layers (2) on both surfaces of the support layer (1).

4. The current collector as claimed in any one of claims 1 to 3, wherein the support structure (102) has a Young's modulus that is greater than that of the insulating base (101).

5. The current collector as claimed in any one of claims 1 to 4, wherein the support structure (102) is made of an electrically conductive material.

6. The current collector as claimed in claim 5, wherein the support structure (102) is made of at least one of aluminum, copper, nickel, titanium, silver, nickel-copper alloy, aluminum-zirconium alloy, aluminum-lithium alloy, titanium-aluminum alloy, magnesium alloy, beryllium alloy, and titanium alloy;
and/or
wherein the support structure (102) is made using at least one of mechanical roll rolling, bonding, vapor deposition method, chemical plating, or laser etching.

7. The current collector as claimed in any one of claims 1 to 4, wherein the support structure (102) is made of a high performance fiber material; wherein the high performance fiber material having a strength greater than 17.6 cN/dtex and an elasticity modulus of 440 cN/dtex or greater.

8. The current collector as claimed in claim 7, wherein the support structure (102) is made of at least one of poly-p-phenylene terephthalamide fibers, aromatic polyamide copolymer fibers, heterocyclic polyamide fibers, carbon fibers, graphite fibers, and silicon carbide fibers.

9. The current collector as claimed in any one of claims 1 to 8, wherein the insulating base (101) is made of a polymeric material,
preferably,
wherein the insulating base (101) is made of at least one of polyamide, polyterephthalate, polyimide, polyethylene, polypropylene, polystyrene, polyvinyl chloride, aramid, polydimethylene diamide, acrylonitrile-butadiene-styrene copolymer, polybutylene terephthalate, poly-p-phenylene terephthamide, ethylene-propylene rubber, polyformaldehyde, epoxy resin, phenolic resin, polytetrafluoroethylene, polyphenylene sulfide, polyvinylidene fluoride, silicone rubber, polycarbonate, cellulose, cellulose derivative, starch, starch derivative, protein, protein derivative, polyvinyl alcohol, cross-linked polyvinyl alcohol, polyethylene glycol, and cross-linked polyethylene glycol;

10. The current collector as claimed in any one of claims 1 to 9, wherein the insulating base (101) is made of a composite material;
wherein preferably, the insulating base (101) is made of a composite material formed from a polymeric material and an inorganic material, and the inorganic material is a ceramic material or a glass material.

11. The current collector as claimed in any one of claims 1 to 9, wherein the support structure (102) is continuously distributed along a first direction, the first direction being perpendicular to a thickness direction of the current collector;
preferably,
wherein the support layer (1) comprises a first end and a second end set opposite each other along a first direction, and the support structure (102) is continuously distributed between the first end and the second end.

12. The current collector as claimed in any one of claims 1 to 10,
wherein the support structure comprises a connection portion (121) and at least two extension portions (122), the extension portions (122) having a net-like projection along a thickness direction of the current collector, and two adjacent extension portions (122) being spaced apart and connected by the connection portion (121).

13. An electrode plate comprising:
the current collector as claimed in any one of claims 1 to 11;
an active material layer, applied on a surface of the conductive layer.

14. A cell (20) comprising the electrode plate as claimed in claim 13.

15. An electrical device comprising a cell as claimed in claim 14, the cell being used to provide electrical energy.

## Patentansprüche

1. Stromkollektor, umfassend:
eine Trägerschicht (1), umfassend eine isolierende Basis (101) und eine Trägerstruktur (102), wobei die Trägerstruktur (102) in die isolierende Basis (101) eingebettet ist, um die Festigkeit der Trägerschicht (1) zu erhöhen; und
eine leitfähige Schicht (2), die auf einer Oberfläche der Trägerschicht (1) bereitgestellt ist, wobei die Oberfläche der Trägerschicht (1) eine Oberfläche der Trägerschicht (1) ist, die rechtwinklig zu ihrer Dickenrichtung ist;
**dadurch gekennzeichnet, dass** die Trägerstruktur (102) eine netzartige Projektion entlang einer Dickenrichtung des Stromkollektors hat, und dass die isolierende Basis (101) Lücken in der Trägerstruktur (102) füllt.

2. Stromkollektor nach Anspruch 1, wobei die Trägerschicht (1) einen Young-Modul im Bereich von 4 GPa ≤ E ≤ 20 GPa aufweist.

3. Stromkollektor nach Anspruch 1 oder 2, wobei die leitfähige Schicht (2) auf beiden Oberflächen der Trägerschicht (1) bereitgestellt ist, und die Trägerstruktur (102) die leitfähigen Schichten (2) auf beiden Oberflächen der Trägerschicht (1) verbindet.

4. Stromkollektor nach einem der Ansprüche 1 bis 3, wobei die Trägerstruktur (102) einen Young-Modul aufweist, der größer als derjenige der isolierenden Basis (101) ist.

5. Stromkollektor nach einem der Ansprüche 1 bis 4, wobei die Trägerstruktur (102) aus einem elektrisch leitfähigen Material gefertigt ist.

6. Stromkollektor nach Anspruch 5, wobei die Trägerstruktur (102) aus mindestens einem von Aluminium, Kupfer, Nickel, Titan, Silber, Nickel-Kupfer-Legierung, Aluminium-Zirconium-Legierung, Aluminium-Lithium-Legierung, Titan-Aluminium-Legierung, Magnesiumlegierung, Berylliumlegierung und Titanlegierung gefertigt ist;
und/oder
wobei die Trägerstruktur (102) unter Verwendung von mindestens einem von Walzen mit der mechanischen Walze, Bonden, Gasphasenabscheidungsverfahren, chemischem Plattieren oder Laser-Ätzen gefertigt ist.

7. Stromkollektor nach einem der Ansprüche 1 bis 4, wobei die Trägerstruktur (102) aus einem Hochleistungsfasermaterial gefertigt ist; wobei das Hochleistungsfasermaterial eine Festigkeit größer als 17,6 cN/dtex und einen Elastizitätsmodul von 440 cN/dtex oder größer aufweist.

8. Stromkollektor nach Anspruch 7, wobei die Trägerstruktur (102) aus mindestens einem von Poly-p-phenylenterephthalamid-Fasern, aromatischen Polyamidcopolymerfasern, heterocyclischen Polyamidfasern, Kohlefasern, Graphitfasern und Siliciumcarbidfasern gefertigt ist.

9. Stromkollektor nach einem der Ansprüche 1 bis 8, wobei die isolierende Basis (101) aus einem polymeren Material gefertigt ist,
wobei die isolierende Basis (101) vorzugsweise aus mindestens einem von Polyamid, Polyterephthalat, Polyimid, Polyethylen, Polypropylen, Polystyrol, Polyvinylchlorid, Aramid, Polydimethylendiamid, Acrylnitril-Butadien-Styrol-Copolymer, Polybutylenterephthalat, Poly-p-phenylenterephthamid, Ethylen-Propylen-Kautschuk, Polyformaldehyd, Epoxidharz, phenolischem Harz, Polytetrafluorethylen, Polyphenylensulfid, Polyvinylidenfluorid, Silikonkautschuk, Polycarbonat, Cellulose, Cellulosederivat, Stärke, Stärkederivat, Protein, Proteinderivat, Polyvinylalkohol, vernetztem Polyvinylalkohol, Polyethylenglykol und vernetztem Polyethylenglykol gefertigt ist.

10. Stromkollektor nach einem der Ansprüche 1 bis 9, wobei die isolierende Basis aus einem Verbundmaterial gefertigt ist;
wobei die isolierende Basis (101) vorzugsweise aus einem Verbundmaterial gefertigt ist, das aus einem polymeren Material und einem anorganischen Material gebildet ist, und wobei das anorganische Material ein Keramikmaterial oder ein Glasmaterial ist.

11. Stromkollektor nach einem der Ansprüche 1 bis 9, wobei die Trägerstruktur kontinuierlich entlang einer ersten Richtung verteilt ist, wobei die erste Richtung rechtwinklig zu einer Dickenrichtung des Stromkollektors ist;
wobei die Trägerschicht (1) vorzugsweise ein erstes Ende und ein zweites Ende umfasst, die entlang einer ersten Richtung einander gegenüber liegen, und wobei die Trägerstruktur (102) kontinuierlich zwischen dem ersten Ende und dem zweiten Ende verteilt ist.

12. Stromkollektor nach einem der Ansprüche 1 bis 10,
wobei die Trägerstruktur einen Verbindungsabschnitt (121) und mindestens zwei Verlängerungsabschnitte (122) umfasst, wobei die Verlängerungsabschnitte (122) eine netzartige Projektion entlang einer Dickenrichtung des Stromkollektors aufweisen, und zwei benachbarte Verlängerungsabschnitte (122) beabstandet und mittels des Verbindungsabschnitts (121) verbunden sind.

13. Elektrodenplatte, umfassend:
den Stromkollektor nach einem der Ansprüche 1 bis 11;
eine Aktivmaterialschicht, die auf eine Oberfläche der leitfähigen Schicht aufgebracht ist.

14. Zelle (20), umfassend die Elektrodenplatte nach Anspruch 13.

15. Elektrische Vorrichtung, umfassend eine Zelle nach Anspruch 14, wobei die Zelle zum Bereitstellen von elektrischer Energie verwendet wird.

## Revendications

1. Collecteur de courant comprenant :
une couche de support (1) comprenant une base isolante (101) et une structure de support (102), la structure de support (102) étant incorporée dans la base isolante (101) pour améliorer la résistance de la couche de support (1) ; et
une couche conductrice (2), disposée sur une surface de la couche de support (1), la surface de la couche de support (1) étant une surface de la couche de support (1) qui est perpendiculaire à la direction de son épaisseur ;
**caractérisé en ce que** la structure de support (102) comporte une saillie en forme de filet le long d'une direction de l'épaisseur du collecteur de courant, et la base isolante (101) remplit des espaces dans la structure de support (102).

2. Collecteur de courant selon la revendication 1, dans lequel la couche de support (1) présente un module d'Young dans la plage 4 GPa ≤ E ≤ 20 GPa.

3. Collecteur de courant selon la revendication 1 ou 2, dans lequel la couche conductrice (2) est disposée sur les deux surfaces de la couche de support (1), et la structure de support (102) relie les couches conductrices (2) sur les deux surfaces de la couche de support (1).

4. Collecteur de courant selon l'une quelconque des revendications 1 à 3, dans lequel la structure de support (102) présente un module d'Young qui est supérieur à celui de la base isolante (101).

5. Collecteur de courant selon l'une quelconque des revendications 1 à 4, dans lequel la structure de support (102) est constituée d'un matériau électriquement conducteur.

6. Collecteur de courant selon la revendication 5, dans lequel la structure de support (102) est constituée d'au moins un matériau parmi l'aluminium, le cuivre, le nickel, le titane, l'argent, un alliage nickel-cuivre, un alliage aluminium-zirconium, un alliage aluminium-lithium, un alliage titane-aluminium, un alliage de magnésium, un alliage de béryllium, et un alliage de titane ;
et/ou
dans lequel la structure de support (102) est fabriquée au moyen d'au moins un procédé parmi le laminage par rouleaux mécaniques, le collage, le procédé de dépôt en phase vapeur, le dépôt chimique, et la gravure au laser.

7. Collecteur de courant selon l'une quelconque des revendications 1 à 4, dans lequel la structure de support (102) est constituée d'un matériau fibreux à hautes performances, le matériau fibreux à hautes performances ayant une résistance supérieure à 17,6 cN/dtex et un module d'élasticité de 440 cN/dtex ou plus.

8. Collecteur de courant selon la revendication 7, dans lequel la structure de support (102) est constituée d'au moins un type de fibres parmi les fibres de poly-p-phénylènetéréphtalamide, les fibres de copolymère de polyamide aromatique, les fibres de polyamide hétérocyclique, les fibres de carbone, les fibres de graphite, et les fibres de carbure de silicium.

9. Collecteur de courant selon l'une quelconque des revendications 1 à 8, dans lequel la base isolante (101) est constituée d'un matériau polymère,
de préférence
dans lequel la base isolante (101) est constituée d'au moins un matériau parmi le polyamide, le polytéréphtalate, le polyimide, le polyéthylène, le polypropylène, le polystyrène, le polychlorure de vinyle, l'aramide, le polydiméthylènediamide, le copolymère acrylonitrile-butadiène-styrène, le téréphtalate de polybutylène, le poly-p-phénylènetéréphtalamide, le caoutchouc éthylène-propylène, le polyformaldéhyde, une résine époxy, une résine phénolique, le polytétrafluoroéthylène, le polysulfure de phénylène, le polyfluorure de vinylidène, le caoutchouc de silicone, le polycarbonate, la cellulose, un dérivé de cellulose, l'amidon, un dérivé d'amidon, une protéine, un dérivé de protéine, l'alcool polyvinylique, l'alcool polyvinylique réticulé, le polyéthylène glycol, et le polyéthylène glycol réticulé.

10. Collecteur de courant selon l'une quelconque des revendications 1 à 9, dans lequel la base isolante (101) est constituée d'un matériau composite,
de préférence dans lequel la base isolante (101) est constituée d'un matériau composite formé à partir d'un matériau polymère et d'un matériau inorganique, et le matériau inorganique est un matériau céramique ou un matériau vitreux.

11. Collecteur de courant selon l'une quelconque des revendications 1 à 9, dans lequel la structure de support (102) est répartie de façon continue le long d'une première direction, la première direction étant perpendiculaire à une direction de l'épaisseur du collecteur de courant,
de préférence
dans lequel la couche de support (1) comprend une première extrémité et une deuxième extrémité à l'opposé l'une de l'autre le long d'une première direction, et la structure de support (102) est répartie de façon continue entre la première extrémité et la deuxième extrémité.

12. Collecteur de courant selon l'une quelconque des revendications 1 à 10,
dans lequel la structure de support comprend une partie de liaison (121) et au moins deux parties d'extension (122), les parties d'extension (122) comportant une saillie en forme de filet le long d'une direction de l'épaisseur du collecteur de courant, et deux parties d'extension (122) adjacentes étant espacées et reliées par la partie de liaison (121).

13. Plaque d'électrode comprenant :
le collecteur de courant selon l'une quelconque des revendications 1 à 11 ;
une couche de matériau actif, appliquée sur une surface de la couche conductrice.

14. Cellule (20) comprenant la plaque d'électrode selon la revendication 13.

15. Dispositif électrique comprenant une cellule selon la revendication 14, la cellule étant utilisée pour fournir de l'énergie électrique.
